# EUROPÄISCHE PATENTSCHRIFT

(11) **EP 3 947 107 B1**
(45) Veröffentlichungstag und Bekanntmachung des Hinweises auf die Patenterteilung: **21.02.2024**
(21) Anmeldenummer: 20714535.0
(22) Anmeldetag: 24.03.2020
(51) Int. Cl.: B62D 1/185

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 27.03.2019 DE 102019204281
(43) Veröffentlichungstag der Anmeldung: 09.02.2022
(73) Patentinhaber: thyssenkrupp Presta AG, 9492 Eschen (LI); thyssenkrupp AG, 45143 Essen (DE)
(72) Erfinder: BAYER, Tim, 9450 Lüchingen (CH); BLÄTTLER, Simon, 9472 Grabs (CH); KREUTZ, Daniel, 6800 Feldkirch (AT)
(74) Vertreter: thyssenkrupp Intellectual Property GmbH
(86) Internationale Anmeldenummer: PCT/EP2020/058146
(87) Internationale Veröffentlichungsnummer: WO 2020/193542

(56) Entgegenhaltungen:
- EP-A2- 2 213 890

## Beschreibung

### Stand der Technik

Die Erfindung betrifft eine Lenksäule für ein Kraftfahrzeug, umfassend eine Manteleinheit, in der eine Lenkspindel um eine Längsachse drehbar gelagert ist und die mindestens zwei in Richtung der Längsachse relativ zueinander verstellbare, teleskopartig ineinander geführte Mantelrohre aufweist, wobei zwischen den Mantelrohren eine Wälzlagereinheit mit mindestens einem in Richtung der Längsachse abrollbaren Wälzkörper angeordnet ist, wobei die Positioniereinrichtung eine elastische Haltevorrichtung aufweist, die in Richtung der Längsachse an mindestens einem der Mantelrohre angreift und mit der Wälzlagereinheit verbunden ist, und die Haltevorrichtung mindestens ein elastisches Spannelement aufweist, welches in Richtung der Längsachse mit der Wälzlagereinheit und mindestens einem der Mantelrohre verbunden ist.

Eine Lenksäule für ein Kraftfahrzeug weist eine Lenkwelle mit einer in einer Manteleinheit um ihre Längsachse drehbar gelagerten Lenkspindel auf, an deren in Fahrtrichtung hinteren, dem Fahrer zugewandten Ende ein Lenkrad zur Einbringung eines Lenkbefehls durch den Fahrer angebracht ist. Die Manteleinheit wird von einer an der Fahrzeugkarosserie befestigten Trageinheit gehalten, wobei durch eine Verstellung der Manteleinheit relativ zur Trageinheit die Einstellung der Lenkradposition relativ zur Fahrzeugkarosserie ermöglicht wird.

Eine Längsverstellung, bei der das Lenkrad in Längsrichtung, d. h. in Richtung der Längsachse oder in Achsrichtung der Längsachse relativ zur Fahrerposition nach hinten oder nach vorn verstellt werden kann, wird bei einer gattungsgemäßen Lenksäule durch eine teleskopartige Ausgestaltung der Manteleinheit und der Lenkspindel ermöglicht. Außerdem kann die Lenksäule im Fall eines Crashs in Achsrichtung zusammengeschoben werden, wodurch wirksam verhindert wird, dass die Lenksäule in das Innere der Fahrgastzelle eindringt und zu Verletzungen der Insassen führt.

Die Manteleinheit weist mindestens zwei Mantelrohre auf, mit mindestens einem inneren Mantelrohr, welches koaxial in mindestens ein äußeres Mantelrohr eintaucht, und in Achsrichtung teleskopierbar in diesem geführt ist. Durch Zusammenschieben oder Ausziehen der Mantelrohre in Achsrichtung kann die Manteleinheit und damit die Lenksäule entsprechend verkürzt oder verlängert werden. Für einen vergrößerten Verstellbereich kann ein Mehrfachteleskop aus drei oder mehr Mantelrohren gebildet werden, wobei ein inneres Mantelrohr teleskopierbar in einem Zwischenmantelrohr koaxial angeordnet ist, welches seinerseits in einem äußeren Mantelrohr oder einem weiteren Zwischenmantelrohr teleskopierbar aufgenommen ist.

Bei einer gattungsgemäßen Lenksäule ist eine Wälzkörpereinheit zwischen den Mantelrohren angeordnet, mit mindestens einem, bevorzugt mehreren Wälzkörpern wie Kugeln oder Rollen, die außen auf einem inneren Mantelrohr und innen auf einem relativ dazu teleskopierbaren äußeren Mantelrohr in Achsrichtung abwälzbar sind, wie im Stand der Technik beispielsweise in der EP 2 885 193 B1 beschrieben. Dadurch wird eine lineare Wälzlagerung gebildet, die eine leichtgängige Verstellung und eine spielarme, biegesteife Abstützung ermöglicht. Die Wälzkörper sind dabei durch die Roll- und Gleitreibung zwischen den Mantelrohren gehalten, so dass bei einer Verstellung der Mantelrohre die Wälzkörper in Verstellrichtung mitbewegt werden. Dadurch kann jedoch Schlupf in Achsrichtung zwischen den Wälzkörpern und den Mantelrohren auftreten, wodurch die Wälzkörpereinheit undefiniert relativ zu den Mantelrohren wandert. Infolge dessen kann insbesondere nach wiederholtem Verstellen der Lenksäule die Wälzkörpereinheit in derselben Einstellung der Lenksäule unterschiedliche Positionen in Achsrichtung relativ zu den Mantelrohren einnehmen. Nachteilig dabei ist, dass die Manteleinheit in derselben Einstellposition je nach Position der Wälzkörper eine unterschiedliche Steifigkeit haben kann. Außerdem kann die erforderliche Verstellkraft in nachteiliger Weise ansteigen, wenn die Wälzkörpereinheit wandert und vor Erreichen einer Endposition bei der Verstellung der Mantelrohre an einem Endanschlag anschlägt und gestoppt wird, so dass die Wälzkörper beim weiteren Verstellen nicht mehr abrollen können.

Um den vorgenannten Nachteile auszugleichen, ist in der DE 10 2004 014 506 A1 eine längenverstellbare Lenksäule mit einer Positioniereinrichtung zur Positionierung der Wälzlagereinheit relativ zu den Mantelrohren in Achsrichtung vorgeschlagen worden. Die Positioniereinrichtung umfasst ein an der Wälzlagereinheit gelagertes Zahnrad, welches in eine in Achsrichtung an einem Mantelrohr ausgebildete Verzahnung eingreift und dadurch für eine formschlüssige Zwangspositionierung sorgt, wodurch die relative Bewegung der Wälzkörpereinheit und der Mantelrohre synchronisiert werden. Durch das zusätzliche Zahnrad und die Verzahnung entsteht jedoch ein relativ hoher Fertigungs- und Montageaufwand.

Eine Linearführung mit den eingangs genannten Merkmalen ist aus der EP 2 213 890 A2 bekannt. Durch das Spannelement wird jedoch ein relativ großer Bauraum beansprucht, und die Fertigung und Montage ist aufwendig.

Angesichts der vorangehend erläuterten Problematik ist es eine Aufgabe der vorliegenden Erfindung, eine Positioniereinrichtung für eine Lenksäule zur Verfügung zu stellen, die einen geringeren Fertigungs- und Montageaufwand erfordert.

### Darstellung der Erfindung

Diese Aufgabe wird erfindungsgemäß gelöst durch eine Lenksäule mit den Merkmalen des Anspruchs 1. Vorteilhafte Weiterbildungen ergeben sich aus den Unteransprüchen.

Erfindungsgemäß wird für eine Lenksäule für ein Kraftfahrzeug, umfassend eine Manteleinheit, in der eine Lenkspindel um eine Längsachse drehbar gelagert ist und die mindestens zwei in Richtung der Längsachse relativ zueinander verstellbare, teleskopartig ineinander geführte Mantelrohre aufweist, wobei zwischen den Mantelrohren eine Wälzlagereinheit mit mindestens einem abrollbaren Wälzkörper angeordnet ist, und die eine Positioniereinrichtung zur Positionierung der Wälzlagereinheit relativ zu den Mantelrohren in Richtung der Längsachse aufweist, wobei die Positioniereinrichtung eine elastische Haltevorrichtung aufweist, die in Richtung der Längsachse an mindestens einem der Mantelrohre angreift und mit der Wälzlagereinheit verbunden ist, und die Haltevorrichtung mindestens ein elastisches Spannelement aufweist, welches in Richtung der Längsachse mit der Wälzlagereinheit und mindestens einem der Mantelrohre verbunden ist, vorgeschlagen, dass mindestens ein erstes Spannelement in Richtung der Längsachse zwischen der Wälzlagereinheit und einem ersten Mantelrohr angeordnet ist, und ein zweites Spannelement in Richtung der Längsachse zwischen der Wälzlagereinheit und einem zweiten Mantelrohr angeordnet ist, wobei die ersten und zweiten Spannelemente in Richtung der Längsachse paarweise angeordnet sind, und vorn und hinten an der Wälzlagereinheit angreifen.

Bevorzugt ist der zumindest eine Wälzkörper in Richtung der Längsachse abrollbar.

Bei der Erfindung weist die Wälzlagereinheit wie an sich bekannt Wälzkörper auf, und ist über die Haltevorrichtung in Richtung der Längsachse elastisch zwischen zwei relativ zueinander teleskopierbaren Mantelrohren aufgehängt. Die Haltevorrichtung ist in Achsrichtung elastisch verformbar, bevorzugt dehnbar ausgestaltet, und ist an ihrem in Achsrichtung vorderen Ende mit dem einen Mantelrohr, und an ihrem dazu entgegengesetzten, hinteren Ende an dem anderen Mantelrohr befestigt. Bei einer relativen Verstellung der Mantelrohre wird die Haltevorrichtung auseinander gezogen oder zusammengedrückt und in Achsrichtung, die der Richtung der Längsachse entspricht, elastisch gedehnt. Dabei bewegen sich die Enden der Haltevorrichtung zusammen mit den Mantelrohren, und aufgrund der elastischen Verformung bewegt sich jeder zwischen den Enden befindliche Abschnitt der Haltevorrichtung in Achsrichtung relativ zu den Enden. Dabei wird die sogenannte elastische Mitte, die definitionsgemäß beiderseits über elastisch gleich verformbare Abschnitte der Haltevorrichtung mit den Enden verbunden ist, um denselben Betrag relativ zu jedem der beiden Enden bewegt.

Die Positionierung der Wälzlagereinheit erfolgt erfindungsgemäß dadurch, dass die Wälzlagereinheit innerhalb des elastisch verformbaren Bereichs mit der Haltevorrichtung verbunden ist, und dadurch bei einer relativen Bewegung in Abhängigkeit der Dehnung der Haltevorrichtung durch die elastischen Kräfte definiert zwischen den Enden der Haltevorrichtung und damit relativ zu den Mantelrohren positioniert wird. Bei einem möglichen Wandern durch Schlupf und Reibung wird die Wälzlagereinheit durch die dann auftretenden elastischen Kräfte der Haltevorrichtung positioniert. Durch die elastischen Kräfte wird eine in Achsrichtung synchronisierte Bewegung zwischen den Mantelrohren und der Wälzlagereinheit erzeugt.

Wird die Wälzlagereinheit beispielsweise in der elastischen Mitte an der Haltevorrichtung angebracht, wird sie unabhängig von der Verstellposition immer in der Mitte zwischen den Befestigungspunkten gehalten und positioniert, an denen die Enden der Haltevorrichtung mit den Mantelrohren verbunden sind. Dadurch erfolgt eine synchronisierte Relativbewegung, welche dem schlupffreien Abrollen der Wälzkörper entspricht.

Eine erfindungsgemäße elastische Haltevorrichtung kann mit relativ geringem Aufwand gefertigt und konstruktiv in eine Lenksäule integriert werden. Weiterhin ist vorteilhaft, dass durch die erfindungsgemäß elastische Aufhängung störende Betriebsgeräusche weitgehend vermieden werden, die bei formschlüssigen Zwangspositionierungen auftreten können.

Bevorzugt können die Wälzkörper als Kugeln, Zylinderrollen, Zylinderstifte oder Tonnen ausgebildet sein. Die Wälzkörper können aus einem metallischen oder einem nichtmetallischen Werkstoff gebildet sein.

Bevorzugt kann vorgesehen sein, dass das elastische Halteelement und die Wälzlagereinheit als einstückig integrales Bauteil ausgebildet sind.

Bevorzugt kann vorgesehen sein, dass die Haltevorrichtung mindestens ein elastisches Spannelement aufweist, welches in Achsrichtung mit der Wälzlagereinheit und mindestens einem Mantelrohr verbunden ist. Ein Spannelement kann bevorzugt ein Federelement aufweisen, welches in Achsrichtung elastisch wirksam ist, beispielsweise eine Spiralfeder, ein gummielastisches Element, eine Gasdruckfeder oder dergleichen. Bevorzugt weist ein Federelement eine Zugfeder auf, oder ist als solche ausgebildet. Alternativ kann auch eine Druckfeder zum Einsatz kommen. Ein derartiges Spannelement kann mit geringem Aufwand mit den erforderlichen Abmessungen und elastischen Eigenschaften zur Verfügung gestellt werden.

Es ist möglich, dass mindestens ein Spannelement in Achsrichtung durchgehend zwischen den beiden Mantelrohren angebracht ist, an dem die Wälzlagereinheit zwischen den mit den Mantelrohren verbundenen Enden angebracht ist.

Erfindungsgemäß ist vorgesehen, dass mindestens ein erstes Spannelement in Richtung der Längsachse zwischen der Wälzlagereinheit und einem ersten Mantelrohr angeordnet ist, und ein zweites Spannelement in Richtung der Längsachse zwischen der Wälzlagereinheit und einem zweiten Mantelrohr angeordnet ist, wobei die ersten und zweiten Spannelemente in Richtung der Längsachse paarweise angeordnet sind, und vorn und hinten an der Wälzlagereinheit angreifen.

Bei dem ersten Mantelrohr kann es sich um ein inneres oder äußeres Mantelrohr handeln, und bei dem zweiten Mantelrohr um ein dieses umgebendes, relativ dazu äußeres, oder ein in dieses eintauchendes, relativ dazu inneres Mantelrohr. Mindestens ein erstes und ein zweites Spannelement greifen erfindungsgemäß paarweise vorn und hinten an der Wälzlagereinheit an, und sind jeweils mit ihrem der Wälzlagereinheit abgewandten Ende an dem ersten und zweiten Mantelrohr befestigt. Mit anderen Worten ist die Wälzlagereinheit über ein erstes und ein zweites Spannelement zwischen den Mantelrohren elastisch aufgehängt bzw. eingespannt. Beispielsweise als Spannelement eingesetzte Federelemente wie Spiralfedern oder dergleichen können zur Montage einfach an der Wälzlagereinheit und den Mantelrohren befestigt werden, beispielsweise mittels an den Enden ausgebildeten Befestigungsmitteln wie Haken, Öffnungen oder dergleichen. Dabei ist vorteilhaft, dass die elastische Spannkraft einfach durch die Auswahl und Gestaltung der Federelemente vorgegeben und an die spezifischen Anforderungen einer Lenksäule angepasst werden kann.

Es ist vorteilhaft, dass die ersten und zweiten Spannelemente die gleiche Federcharakteristik haben. Wenn die ersten und zweiten Spannelemente die gleiche Federcharakteristik haben, ist die Wälzlagereinheit vorteilhaft in der oben definierten elastischen Mitte zwischen den Mantelrohren aufgehängt. Bei einer relativen Verstellung der Mantelrohre um einen vorgegebenen Verstellweg in Achsrichtung wird die Wälzlagereinheit immer an der definierten und vorgegebenen Position bevorzugt in jedem Verstellzustand immer mittig zwischen den mit den Mantelrohren verbundenen Enden der Spannelemente elastisch gehalten und positioniert. Reibungskräfte, durch die im Stand der Technik die Wälzkörpereinheit wie oben beschrieben unkontrolliert wandern könnte, werden durch die elastischen Kräfte der erfindungsgemäßen Haltevorrichtung ausgeglichen. Weiterhin kann der gleiche Federtyp für die ersten und zweiten Spannelemente eingesetzt werden, wodurch Fertigung und Lagerhaltung vereinfacht werden.

Es ist prinzipiell auch möglich, dass die ersten und zweiten Spannelemente eine unterschiedliche Federcharakteristik aufweisen, um bei Bedarf eine zum ersten und zweiten Mantelrohr unterschiedliche relative Bewegung der Wälzlagereinheit zu erzeugen.

Die ersten und zweiten Vorspannelemente können in Achsrichtung paarweise angeordnet sein. Dadurch kann eine gleichmäßige Krafteinleitung in Achsrichtung in die Wälzlagereinheit erfolgen.

Es kann vorgesehen sein, dass mehrere Spannelemente um die Längsachse verteilt angeordnet sind, bevorzugt gleichmäßig verteilt angeordnet sind. Dabei können bevorzugt zwei, drei oder mehr Federelemente über den Umfang, bevorzugt gleichmäßig verteilt angeordnet sein. Durch die Anzahl der Federelemente kann die elastische Spannkraft vorgegeben und angepasst werden, wobei der radiale Bauraumbedarf durch die kleineren Abmessungen der einzelnen Vorspannelemente in vorteilhafter Weise relativ gering ist. Eine achssymmetrische Anordnung ermöglicht eine gleichmäßige Krafteinleitung in die Wälzlagereinheit. Außerdem kann die Anzahl der Spannelemente mit der Seitenzahl von mehrkantig-prismatischen Mantelrohren korrelieren, beispielsweise können bei einem Mantelrohr mit achteckigen Querschnitt zwei, vier oder acht Spannelemente achssymmetrisch verteilt angeordnet werden, oder bei einem sechseckigen Querschnitt zwei, drei oder sechs Spannelemente.

Bevorzugt kann vorgesehen sein, dass die Wälzkörpereinheit einen Wälzkörperkäfig aufweist, in dem mindestens ein Wälzkörper um seine Abrollachse drehbar aufgenommen ist, und an dem die Haltevorrichtung angreift. Ein Wälzkörperkäfig, der beispielsweise als Kugel- oder Rollenkäfig ausgebildet sein kann, ist koaxial in dem Zwischenraum zwischen den Mantelrohren angeordnet, und dient zur Halterung und Führung von in der Regel mehreren Wälzkörpern, die in entsprechend ausgestalteten Aufnahmen um ihre Wälzachse frei drehbar aufgenommen sind, wobei dieser aus einem Kunststoff und/oder einem metallischen Werkstoff wie Stahl gebildet sein kann. Eine Mehrzahl von Wälzkörpern kann auf diese Art jeweils in achsparallelen Reihen angeordnet sein, wobei bevorzugt mehrere Reihen über den Umfang verteilt angeordnet sind. Das oder die Spannelemente sind vorzugsweise auf beiden Seiten bezogen auf die Achsrichtung - jeweils vorn und hinten - an dem Wälzkörperkäfig befestigt. Dadurch wird die durch den Wälzkörperkäfig mit den darin aufgenommenen Wälzkörpern gebildete Wälzlagereinheit erfindungsgemäß elastisch positioniert.

Eine Positionsbezeichnung "vorn" und "hinten" bezeichnet jeweils eine relative Anordnung zueinander bezogen auf die Richtung der Längsachse, also die Achsrichtung.

Eine vorteilhafte Weiterbildung ist, dass mehrere - bevorzugt in achsparallelen Reihen angeordnete - Wälzkörper und mehrere Spannelemente in Umfangsrichtung um die Längsachse herum zueinander beabstandet angeordnet sind. Dabei sind die Wälzkörper und die Spannelemente jeweils relativ zum Wälzkörperkäfig in Umfangsrichtung versetzt angeordnet, um eine vorteilhafte symmetrische Krafteinleitung zu gewährleisten. Besonders bevorzugt sind die Wälzkörper und die Spannelemente zueinander in Umfangsrichtung alternierend angeordnet.

Die Lenksäule kann mindestens zwei, bevorzugt drei teleskopierbare Mantelrohre aufweisen, wobei mindestens eine Haltevorrichtung zwischen zwei der Mantelrohre angeordnet ist. Bei einem derartigen Mehrfachteleskop sind zwischen einem Außenmantelrohr und einem Innenmantelrohr ein oder mehrere Zwischenmantelrohre teleskopierbar eingesetzt. Dadurch kann ein besonders großes Verstellverhältnis zwischen der maximal zusammengeschobenen und der maximal auseinander gefahrenen Verstellposition realisiert werden, wie dies beispielsweise bei verstaubaren Lenksäulen für autonomen Fahrbetrieb vorteilhaft ist.

Zur Verstellung der Lenksäule kann ein motorischer Verstellantrieb vorgesehen sein, der mit den Mantelrohren gekoppelt ist, um die Mantelrohre zumindest in Achsrichtung relativ zueinander zu verstellen. Von dem motorischen Verstellantrieb kann das Innenmantelrohr relativ zum Außenmantelrohr in Achsrichtung ein- und ausfahrbar sein. Der Verstellantrieb kann einen Spindeltrieb umfassen, mit einer auf einer Gewindespindel angeordneten Spindelmutter, und einem Antriebsmotor, von dem die Gewindespindel und die Spindelmutter relativ zueinander drehend antreibbar sind. Derartige Verstellantriebe sind im Stand der Technik prinzipiell bekannt und gelten als zuverlässig und robust. Dabei ist die Spindelmutter an dem einen Mantelrohr, dem Innen- oder Außenmantelrohr, in Richtung der Längsachse unverschieblich angebracht, und die Gewindespindel an dem dazu teleskopierbaren anderen Mantelrohr, dem Außen- oder Innenmantelrohr. Von einem elektrischen Stellmotor wird über ein geeignetes Getriebe, beispielsweise ein Schnecken- oder Riemengetriebe, die Spindelmutter oder die Gewindespindel drehend angetrieben, wodurch die relativ dazu bezüglich der Drehung feststehende Gewindespindel oder Spindelmutter translatorisch in Richtung der Spindellängsachse bewegt wird, und je nach relativer Drehrichtung das Innenmantelrohr relativ zum Außenmantelrohr in Achsrichtung ein- oder ausfährt.

Die Manteleinheit bildet mit der darin gelagerten Lenkspindel eine Stelleinheit. Die Stelleinheit kann in einer mit einer Fahrzeugkarosserie verbindbaren Trageinheit gehalten sein. Dabei kann vorgesehen sein, dass die Stelleinheit an der Trageinheit um eine quer zur Längsachse, also orthogonal zur Achsrichtung liegende Schwenkachse höhenverschwenkbar gelagert ist. Durch die Verschwenkung um eine derartige horizontale Schwenkachse kann eine Höhenverstellung realisiert werden, bei der das am hinteren Ende der Lenkspindel angebrachte Lenkrad in der Höhe relativ zur Fahrerposition eingestellt werden kann.

Die Höhenverstellung kann manuell erfolgen. Insbesondere zum automatisierten Verstauen der Lenksäule beim autonomen Fahren ist es vorteilhaft, dass ein elektrischer Höhen-Verstellantrieb mit der Trageinheit und der Stelleinheit verbunden ist, von dem die Stelleinheit relativ zur Trageinheit um die Schwenkachse bewegbar ist. Der Höhen-Verstellantrieb ist an sich ebenfalls bekannt und kann beispielsweise als elektromotorisch angetriebener Spindeltrieb realisiert werden, wie vorangehend für die Längsverstellung beschrieben.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer schematischen perspektivischen Ansicht,
- Figur 2: die Lenksäule gemäß Figur 1 in zusammen gefahrenem Zustand,
- Figur 3: die Lenksäule gemäß Figur 1 in einer schematischen teilweise aufgeschnittenen Ansicht,
- Figur 4: die Lenksäule in einer Ansicht wie in Figur 3 in zusammen gefahrenem Zustand gemäß Figur 2,
- Figur 5: einen Längsschnitt entlang der Längsachse durch die Lenksäule gemäß Figur 1,
- Figur 6: einen Längsschnitt wie in Figur 5 durch die Lenksäule in zusammen gefahrenem Zustand gemäß Figuren 2 und 4.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

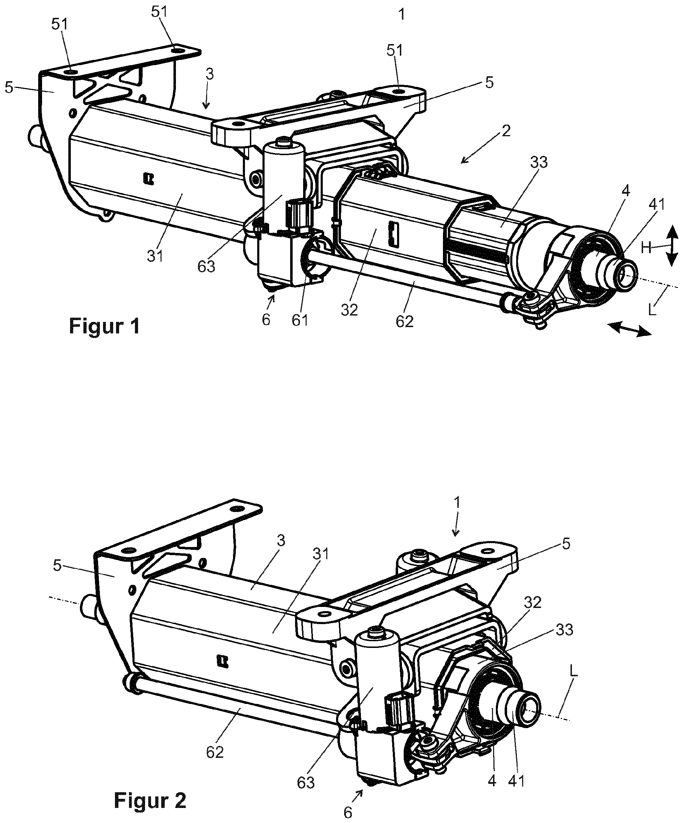

Figur 1 zeigt eine erfindungsgemäße Lenksäule 1 in einer Ansicht bezüglich der Fahrtrichtung von schräg hinten, die eine Stelleinheit 2 aufweist. Die Stelleinheit 2 umfasst eine Manteleinheit 3, die ein Außenmantelrohr 31, ein Zwischenmantelrohr 32 und ein Innenmantelrohr 33 aufweist. Die Mantelrohre 31, 32 und 33 sind in Achsrichtung einer Längsachse L teleskopierend verschiebbar, koaxial ineinander angeordnet, wie mit dem Doppelpfeil angedeutet.

In der Manteleinheit 3 ist um die Längsachse L drehbar eine Lenkspindel 4 gelagert, die an ihrem hinteren Ende einen Anschlussabschnitt 41 zur Anbringung eines nicht dargestellten Lenkrads aufweist.

Die Manteleinheit 3 ist in einer zweiteiligen Trageinheit 5 gehalten, welche Befestigungsmittel 51 in Form von Öffnungen zur Anbringung an einer nicht dargestellten Fahrzeugkarosserie aufweist.

Ein Verstellantrieb 6 weist einen Spindeltrieb mit einer Spindelmutter 61 und einer darin eingeschraubten Gewindespindel 62 auf, die von einem elektrischen Motor 63 relativ zueinander drehend antreibbar sind. Die Gewindespindel 62 erstreckt sich parallel zur Längsachse L und ist mit dem Innenmantelrohr 33 verbunden, und die Spindelmutter 61 stützt sich über den Verstellantrieb 6 in Längsrichtung, die der Achsrichtung der Längsachse L entspricht, an dem Außenmantelrohr 31 ab. Durch eine relative Drehung mittels des Motors 63 werden die Gewindespindel 62 und die Spindelmutter 61 je nach Drehrichtung zusammen oder auseinander bewegt, wodurch das Innenmantelrohr 33 in Achsrichtung der Längsachse L in das Außenmantelrohr 31 eingefahren oder ausgefahren wird, wie mit dem Doppelpfeil angedeutet. Dadurch wird eine Längsverstellung realisiert, durch die ein an dem Anschlussabschnitt 41 angebrachtes Lenkrad nach vorn in eine Verstauposition gebracht werden kann, in der das Innenmantelrohr 33 und das Zwischenmantelrohr 32 in dem Außenmantelrohr 31 eingefahren, d.h. nach vorn versenkt sind, oder in eine Bedienposition im Bedienbereich, in der die Mantelrohre 31, 32 und 33 auseinander ausgefahren sind.

Alternativ kann sich die Spindelmutter 61 an dem Innenmantelrohr 33, und die Gewindespindel 62 an dem Außenmantelrohr 31 abstützen.

In Figur 1 ist eine Verstellposition der Lenksäule 1 in einer Bedienstellung gezeigt, bei der das Zwischenmantelrohr 32 und das Innenmantelrohr 33 in Achsrichtung nach hinten bezogen auf die Fahrtrichtung des Kraftfahrzeugs - in der Zeichnung nach rechts - zumindest teilweise aus dem Außenmantelrohr 31 herausgefahren sind, so dass sich ein an dem Anschlussabschnitt 41 angebrachtes Lenkrad im Bedienbereich zur Eingabe von Lenkbefehlen befindet. Figur 2 zeigt in derselben Perspektive die Verstauposition, bei der das Zwischenmantelrohr 32 und das Innenmantelrohr 33 maximal teleskopierend in das Außenmantelrohr 31 hinein eingeschoben sind. Dadurch ist die Lenksäule 1 maximal in Achsrichtung verkürzt, so dass das Lenkrad - beispielsweise im autonomen Fahrbetrieb - außerhalb des Bedienbereichs verstaut sein kann.

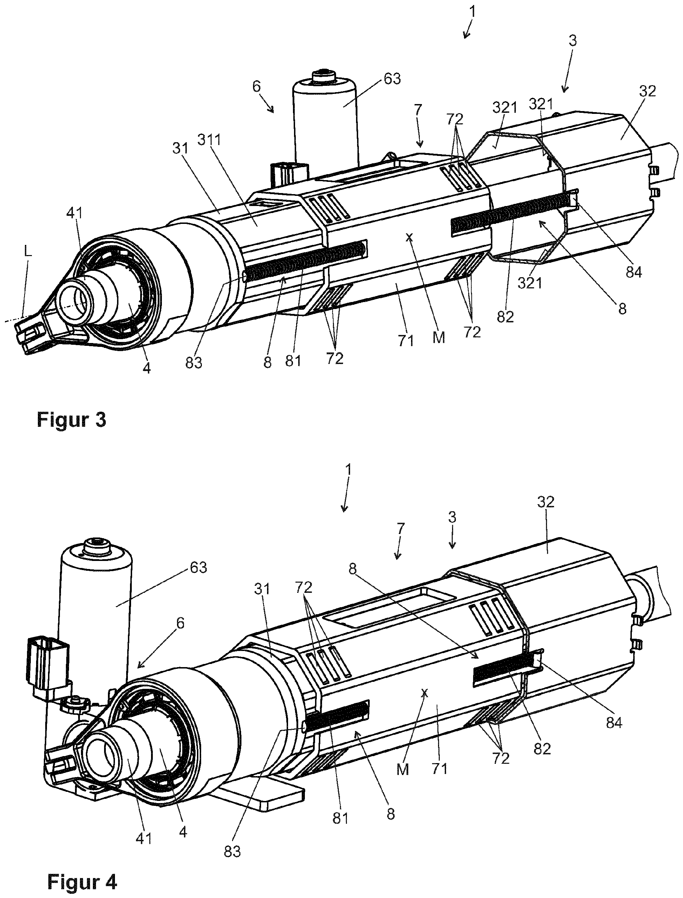

In den Figuren 3 und 4 ist die Lenksäule 1 in einer schematischen perspektivischen Teilansicht dargestellt, wobei der hintere, dem Anschlussabschnitt 41 zugewandte axiale Abschnitt des Zwischenmantelrohrs 32, in den das Innenmantelrohr 33 eintaucht, schematisch abgeschnitten und weggelassen ist, so dass ein Blick in den Zwischenraum zwischen den Mantelrohren 32 und 33 freigegeben ist. Dabei zeigt Figur 3 den auseinander gezogenen Verstellzustand wie in Figur 1, und Figur 4 die Verstauposition gemäß Figur 2.

Eine Wälzlagereinheit 7 weist einen koaxial zwischen den Mantelrohren 31 und 32 angeordneten, hülsenförmigen Rollenkäfig 71 auf, in dem als Wälzkörper jeweils eine Mehrzahl von Rollen 72 jeweils in achsparallelen Reihen positioniert, drehbar gehalten sind. Die Rollen 72 rollen zwischen außen auf dem Innenmantelrohr 31 ausgebildeten Laufbahnen 311 und innen in dem Zwischenmantelrohr 32 ausgebildeten Laufbahnen 321 ab, so dass zwischen den Mantelrohren 31 und 32 eine lineare Wälzlagerung in Achsrichtung gebildet ist.

Eine erfindungsgemäße Haltevorrichtung 8 umfasst elastische Spannelemente in Form von Federelementen 81 und 82, die im gezeigten Beispiel als in Achsrichtung dehnbare Spiralfedern, bevorzugt als Druckfeder ausgebildet sind. Das hintere Federelement 81 ist mit seinem hinteren - in dieser Ansicht links liegenden - Ende an einem Befestigungspunkt 83 im hinteren Bereich des Innenmantelrohrs 31 gefestigt, und mit seinem vorderen Ende am Rollenkäfig 71. Das hintere Federelement 82 ist mit seinem vorderen - in dieser Ansicht rechts liegenden - Ende an einem Befestigungspunkt 84 im vorderen Bereich des Innenmantelrohrs 31 befestigt, und mit seinem hinteren Ende am Rollenkäfig 71. Die Federelemente 81 und 82 greifen folglich paarweise an dem Rollenkäfig 71 an, so dass dieser in Achsrichtung elastisch zwischen den Mantelrohren 31 und 32 aufgehängt ist.

Die Federelemente 81 und 82 haben bevorzugt, wie im gezeigten Beispiel, dieselbe Federcharakteristik. Dadurch befindet sich die elastische Mitte M in Achsrichtung mittig zwischen den Befestigungspunkten 83 und 84. Dort befindet sich auch der zwischen den Federelementen 81 und 82 elastisch aufgehängte Rollenkäfig 71 und damit die Wälzlagereinheit 7 in jedem Verstellzustand der Manteleinheit 3 in der Mitteposition zwischen den Mantelrohren 31 und 32. Die Federelemente 81 und 82 sind in dem auseinander gezogenen Einstellzustand von Figur 3 geringer, und in dem Verstauzustand von Figur 4 stärker, aber immer gleich elastisch ausgelenkt, sprich zusammengedrückt. Alternativ könnten auch Zugfedern verwendet werden, wobei dann die Federelemente 81 und 82 in dem auseinander gezogenen Einstellzustand ähnlich Figur 3 stärker, und in dem Verstauzustand ähnlich dem von Figur 4 geringer, aber immer gleich elastisch ausgelenkt, sprich auseinander gezogen sind. Dabei entspricht die durch die Haltevorrichtung 8 elastisch unterstützte Positionierung des Rollenkäfigs 71 der bei einem theoretischen schlupffreien Abrollen der Wälzkörper 72 auf den Laufbahnen 311 und 321 erreichten idealen Position relativ zu den Mantelrohren 31 und 32.

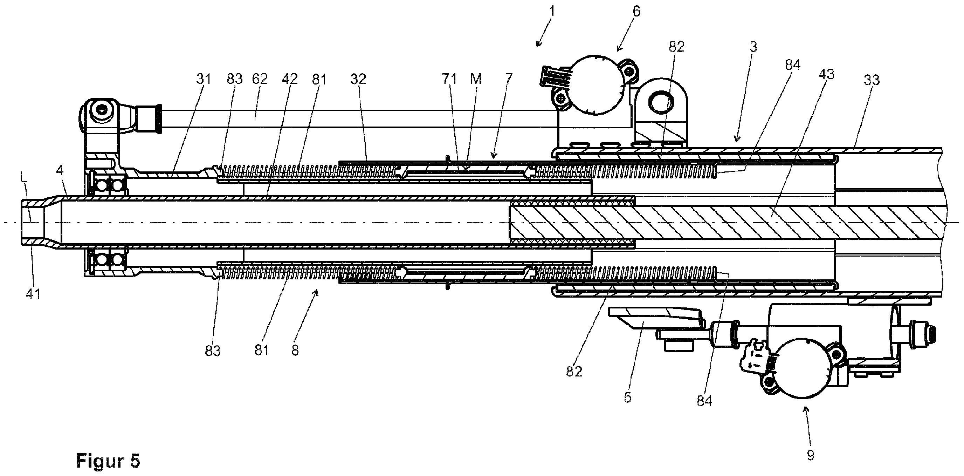

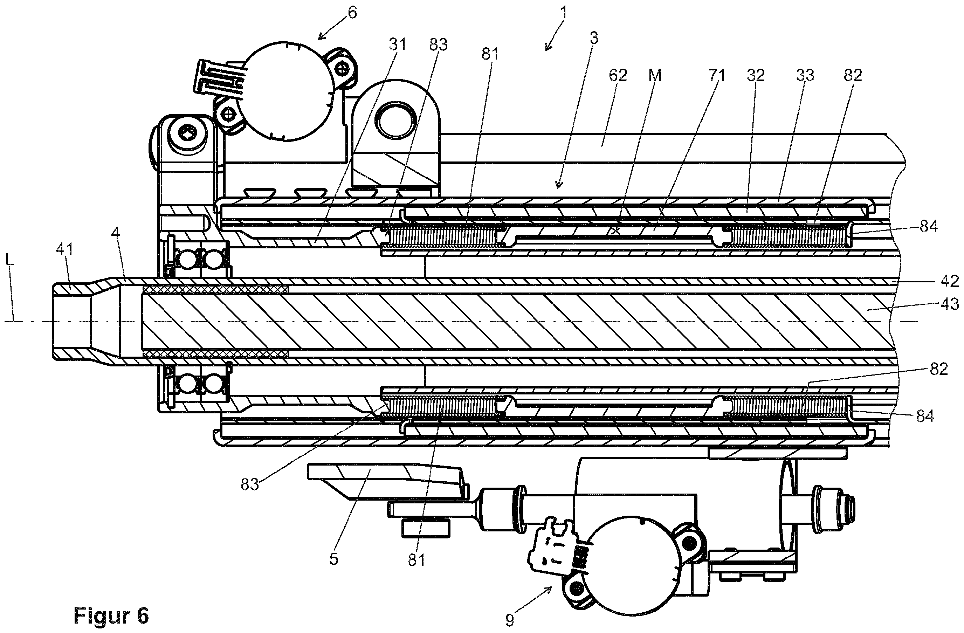

Figur 5 zeigt den auseinander gezogenen Einstellzustand von Figur 1 und 3 im Längsschnitt, und Figur 6 den zusammen geschobenen Verstauzustand. Darin ist erkennbar, dass die Lenkspindel 4 ebenfalls in Achsrichtung teleskopierbar ausgebildet ist, mit einer Außenwelle 42 und einer drehmomentschlüssig, in Achsrichtung verschiebbar in diese eintauchende Innenwelle 43.

Aus Figur 5 ist ersichtlich, dass die Federelemente 81 und 82 gleich in Achsrichtung gespannt sind, wobei sich der Rollenkäfig 71 in der Mitte M zwischen den Befestigungspunkten 83 und 84 befindet. Diese relative Position ist auch in der Verstauposition gemäß Figur 6 erhalten, wobei lediglich die als Druckfeder ausgebildeten Federelemente 81 und 82 stärker komprimiert sind.

Aus den Figuren 1 bis 4 ist erkennbar, dass die Mantelrohre 31, 32 und 33 einen mehreckigen, im Beispiel achteckigen Rohrquerschnitt haben, ebenso wie der Rollenkäfig 71. Dabei sind jeweils mehrere Paare von Federelementen 81 und 82 in Umfangsrichtung versetzt zu den Reihen der Rollen 72 angeordnet, d.h. um die Längsachse L herum auf Lücke also in Umfangsrichtung zueinander beabstandet, im Beispiel jeweils um 360°/8=45°. Wie Figuren 5 und 6 entnehmbar, weist die gezeigte Ausführung zwei einander der Achse L symmetrisch gegenüberliegende Paare von Federelementen 81 und 82 auf.

Im gezeigten Beispiel ist die Wälzlagereinheit 7 durch die erfindungsgemäße Haltevorrichtung 8 zwischen den Mantelrohren 31 und 32 aufgehängt. Zusätzlich oder alternativ kann die oder eine weitere Wälzlagereinheit 7 zwischen den Mantelrohren 32 und 33 angeordnet sein.

Weiterhin kann ein motorischer Stellantrieb 9 vorgesehen sein, der ähnlich wie der Stellantrieb 6 ausgebildet sein kann, und zwischen der Manteleinheit 3 und der Trageinheit 5 angeordnet ist, so dass eine Verstellung in Höhenrichtung H ermöglicht ist, wie in Figuren 1 und 2 eingezeichnet.

### Bezugszeichenliste

- 1: Lenksäule
- 2: Stelleinheit
- 3: Manteleinheit
- 31: Außenmantelrohr
- 311: Laufbahn
- 32: Zwischenmantelrohr
- 321: Laufbahn
- 33: Innenmantelrohr
- 4: Lenkspindel
- 41: Anschlussabschnitt
- 42: Außenwelle
- 43: Innenwelle
- 44: Führungshülse
- 5: Trageinheit
- 51: Befestigungsmittel
- 6, 9: Verstellantrieb
- 61: Spindelmutter
- 62: Gewindespindel
- 63: Motor
- 7: Wälzlagereinheit
- 71: Rollenkäfig
- 72: Rollen
- 8: Haltevorrichtung
- 81, 82: Federelemente
- 83, 84: Befestigungspunkte

- L: Längsachse
- M: Mitte

## Patentansprüche

1. Lenksäule (1) für ein Kraftfahrzeug, umfassend eine Manteleinheit (3), in der eine Lenkspindel (4) um eine Längsachse (L) drehbar gelagert ist und die mindestens zwei in Richtung der Längsachse (L) relativ zueinander verstellbare, teleskopartig ineinander geführte Mantelrohre (31, 32, 33) aufweist, wobei zwischen den Mantelrohren (31, 32, 33) eine Wälzlagereinheit (7) mit mindestens einem abrollbaren Wälzkörper (72) angeordnet ist, und die eine Positioniereinrichtung zur Positionierung der Wälzlagereinheit (7) relativ zu den Mantelrohren (31, 32, 33) in Richtung der Längsachse (L) aufweist, wobei die Positioniereinrichtung eine elastische Haltevorrichtung (8) aufweist, die in Richtung der Längsachse (L) an mindestens einem der Mantelrohre (31, 32) angreift und mit der Wälzlagereinheit (7) verbunden ist, und die Haltevorrichtung (8) mindestens ein elastisches Spannelement (81, 82) aufweist, welches in Richtung der Längsachse (L) mit der Wälzlagereinheit (7) und mindestens einem der Mantelrohre (31, 32) verbunden ist,
**dadurch gekennzeichnet,**
**dass** mindestens ein erstes Spannelement (82) in Richtung der Längsachse (L) zwischen der Wälzlagereinheit (7) und einem ersten Mantelrohr (32) angeordnet ist, und ein zweites Spannelement (81) in Richtung der Längsachse (L) zwischen der Wälzlagereinheit (7) und einem zweiten Mantelrohr (31) angeordnet ist, wobei die ersten und zweiten Spannelemente (81, 82) in Richtung der Längsachse (L) paarweise angeordnet sind, und vorn und hinten an der Wälzlagereinheit (7) angreifen.

2. Lenksäule (1) nach Anspruch 1, **dadurch gekennzeichnet, dass** ein Spannelement (81, 82) ein Federelement (81, 82) aufweist.

3. Lenksäule (1) nach Anspruch 1 oder 2, **dadurch gekennzeichnet, dass** die ersten und zweiten Spannelemente (81, 82) die gleiche Federcharakteristik haben.

4. Lenksäule (1) nach einem der Ansprüche 1 bis 3, **dadurch gekennzeichnet, dass** mehrere Spannelemente (81, 82) um die Längsachse (L) verteilt angeordnet sind.

5. Lenksäule (1) nach einem der vorangehenden Ansprüche, **dadurch gekennzeichnet, dass** die Wälzkörpereinheit (7) einen Wälzkörperkäfig (71) aufweist, in dem der mindestens eine Wälzkörper (72) um seine Abrollachse drehbar aufgenommen ist, und an dem die Haltevorrichtung (8) angreift.

6. Lenksäule (1) nach Anspruch 5, **dadurch gekennzeichnet, dass** mehrere Wälzkörper (72) und mehrere Spannelemente (81, 82) in Umfangsrichtung um die Längsachse (L) zueinander beabstandet angeordnet sind.

7. Lenksäule (1) nach einem der vorangehenden Ansprüche, **dadurch gekennzeichnet, dass** die Lenksäule (1) mindestens drei teleskopierbare Mantelrohre (31, 32, 33) aufweist, wobei mindestens eine Haltevorrichtung (8) zwischen zwei der Mantelrohre (31, 32, 33) angeordnet ist.

## Claims

1. Steering column (1) for a motor vehicle, comprising a jacket unit (3) in which a steering spindle (4) is mounted rotatably about a longitudinal axis (L) and which has at least two jacket tubes (31, 32, 33) which are adjustable relative to one another in the direction of the longitudinal axis (L) and are guided telescopically one inside the other, a rolling bearing unit (7) with at least one rolling element (72) which can be rolled off being arranged between the jacket tubes (31, 32, 33), and which has a positioning device for positioning the rolling bearing unit (7) relative to the casing tubes (31, 32, 33) in the direction of the longitudinal axis (L), the positioning device having an elastic holding device (8) which engages in the direction of the longitudinal axis (L) on at least one of the casing tubes (31, 32) and is connected to the rolling bearing unit (7), and the holding device (8) having at least one elastic clamping element (81, 82) which is connected in the direction of the longitudinal axis (L) to the rolling bearing unit (7) and at least one of the casing tubes (31, 32),
**characterized in**
**in that** at least one first clamping element (82) is arranged in the direction of the longitudinal axis (L) between the rolling bearing unit (7) and a first casing tube (32), and a second clamping element (81) is arranged in the direction of the longitudinal axis (L) between the rolling bearing unit (7) and a second casing tube (31), the first and second clamping elements (81, 82) being arranged in pairs in the direction of the longitudinal axis (L) and engaging at the front and rear of the rolling bearing unit (7).

2. Steering column (1) according to claim 1, **characterized in that** a tensioning element (81, 82) comprises a spring element (81, 82).

3. Steering column (1) according to claim 1 or 2, **characterized in that** the first and second clamping elements (81, 82) have the same spring characteristics.

4. Steering column (1) according to one of claims 1 to 3, **characterized in that** a plurality of clamping elements (81, 82) are arranged distributed around the longitudinal axis (L).

5. Steering column (1) according to one of the preceding claims, **characterized in that** the rolling element unit (7) has a rolling element cage (71), in which the at least one rolling element (72) is received rotatably about its rolling axis, and on which the holding device (8) engages.

6. Steering column (1) according to claim 5, **characterized in that** a plurality of rolling elements (72) and a plurality of clamping elements (81, 82) are arranged spaced apart from one another in the circumferential direction about the longitudinal axis (L).

7. Steering column (1) according to one of the preceding claims, **characterized in that** the steering column (1) has at least three telescopic casing tubes (31, 32, 33), at least one holding device (8) being arranged between two of the casing tubes (31, 32, 33).

## Revendications

1. Colonne de direction (1) pour un véhicule automobile, comprenant une unité d'enveloppe (3) dans laquelle un arbre de direction (4) est logé de manière rotative autour d'un axe longitudinal (L) et qui comprend au moins deux tubes d'enveloppe (31, 32, 33), une unité de palier à roulement (7) avec au moins un corps de roulement (72) pouvant être déroulé étant disposée entre les tubes d'enveloppe (31, 32, 33), et qui présente un dispositif de positionnement pour positionner l'unité de palier à roulement (7) par rapport aux tubes d'enveloppe (31, 32, 33) dans la direction de l'axe longitudinal (L), le dispositif de positionnement présentant un dispositif de retenue élastique (8) qui s'engage dans la direction de l'axe longitudinal (L) sur au moins l'un des tubes d'enveloppe (31, 32) et est relié à l'unité de palier à roulement (7), et le dispositif de retenue (8) présentant au moins un élément de serrage élastique (81, 82) qui est relié dans la direction de l'axe longitudinal (L) à l'unité de palier à roulement (7) et à au moins l'un des tubes d'enveloppe (31, 32),
**caractérisé en ce que**
**en ce qu'**au moins un premier élément de serrage (82) est disposé dans la direction de l'axe longitudinal (L) entre l'unité de palier à roulement (7) et un premier tube d'enveloppe (32), et un deuxième élément de serrage (81) est disposé dans la direction de l'axe longitudinal (L) entre l'unité de palier à roulement (7) et un deuxième tube d'enveloppe (31), les premier et deuxième éléments de serrage (81, 82) étant disposés par paires dans la direction de l'axe longitudinal (L), et s'engageant à l'avant et à l'arrière de l'unité de palier à roulement (7).

2. Colonne de direction (1) selon la revendication 1, **caractérisée en ce qu'**un élément de serrage (81, 82) comprend un élément de ressort (81, 82).

3. Colonne de direction (1) selon la revendication 1 ou 2, **caractérisée en ce que** les premier et deuxième éléments de tension (81, 82) ont la même caractéristique de ressort.

4. Colonne de direction (1) selon l'une des revendications 1 à 3, **caractérisée en ce que** plusieurs éléments de serrage (81, 82) sont répartis autour de l'axe longitudinal (L).

5. Colonne de direction (1) selon l'une des revendications précédentes, **caractérisée en ce que** l'unité de corps de roulement (7) présente une cage de corps de roulement (71) dans laquelle le au moins un corps de roulement (72) est logé de manière à pouvoir tourner autour de son axe de roulement, et sur laquelle le dispositif de retenue (8) s'engage.

6. Colonne de direction (1) selon la revendication 5, **caractérisée en ce que** plusieurs éléments de roulement (72) et plusieurs éléments de serrage (81, 82) sont disposés à une certaine distance les uns des autres dans la direction circonférentielle autour de l'axe longitudinal (L).

7. Colonne de direction (1) selon l'une des revendications précédentes, **caractérisée en ce que** la colonne de direction (1) comporte au moins trois tubes d'enveloppe (31, 32, 33) télescopiques, au moins un dispositif de maintien (8) étant disposé entre deux des tubes d'enveloppe (31, 32, 33).
